# EUROPEAN PATENT SPECIFICATION

(11) **EP 0 634 346 B1**
(45) Date of publication and mention of the grant of the patent: **26.11.1997**
(21) Application number: 94201846.6
(22) Date of filing: 28.06.1994
(51) Int. Cl.: B65G 21/20

(54) **Support unit for the walls or guides of conveying lines**
Trageeinheit für die Seitenwände oder Führungen von Förderlinien
Unité de support pour les parois ou guides de lignes de transport

(30) Priority: 15.07.1993 IT RE930056 U; 18.01.1994 IT RE940003 U
(43) Date of publication of application: 18.01.1995
(73) Proprietor: F.M. - SOCIETA' A RESPONSABILITA' LIMITATA, 42015 Correggio (Reggio Emilia) (IT)
(72) Inventor: Franchini, Giancarlo, I-42015 Correggio (Reggio Emilia) (IT)
(74) Representative: Corradini, Corrado

(56) References cited:
- GB-A- 875 206
- PATENT ABSTRACTS OF JAPAN vol. 5, no. 65 (M-066) 30 April 1981 & JP-A-56 017 807 (HITACHI LTD) 20 February 1981

## Description

This invention relates to a support unit for the walls or guides of conveying lines.

Conveying lines which advance objects one at a time in succession are known to be provided with lateral walls which serve to guide the objects by delimiting the advancement track along which the objects advance.

As the object size can vary, it is necessary if this happens to correspondingly vary the distance apart or the gauge of the two walls or guides, this operation, which has to maintain the symmetry of the walls or guides about the conveyor axis, being very lengthy and laborious, and involving line down-times which often cannot be tolerated.

The object of the present invention is to provide a support unit for said walls or guides which enables the distance between the walls or guides to be precisely adjusted while maintaining their symmetry, and ensures that they remain in the required position after each adjustment.

Said object is attained by the wall or guide support unit of the invention, as characterised in the claims.

The invention is described in detail hereinafter with reference to the accompanying figures, which illustrate one embodiment thereof.
Figure 1 is a top plan view of a conveying line portion to which the support unit of the invention is applied.
Figure 2 is a front view of the invention with some parts shown in section.

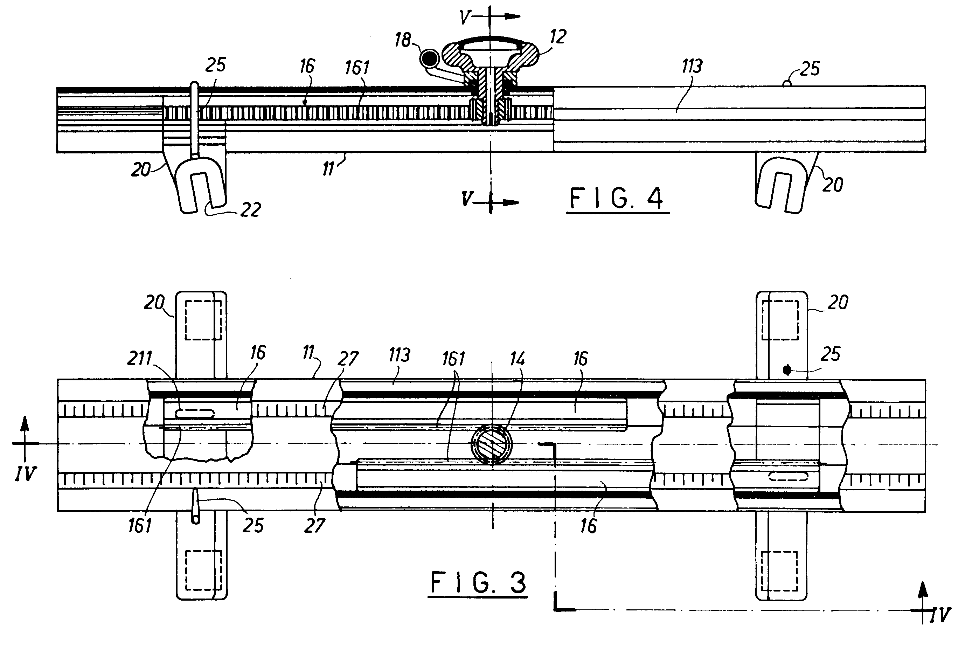

Figure 3 is an enlarged detail of Figure 1 with some parts shown in section.
Figure 4 is a section on the plane IV-IV of Figure 3.
Figure 5 is a section on the plane V-V of Figure 4.
Figure 6 is a section analogous to that of Figure 5 showing a second embodiment of the invention.
Figure 7 is an exploded isometric view of part of the unit of the invention shown in Figure 5.
Figure 8 is an exploded isometric view of part of the unit of the invention shown in Figure 6.

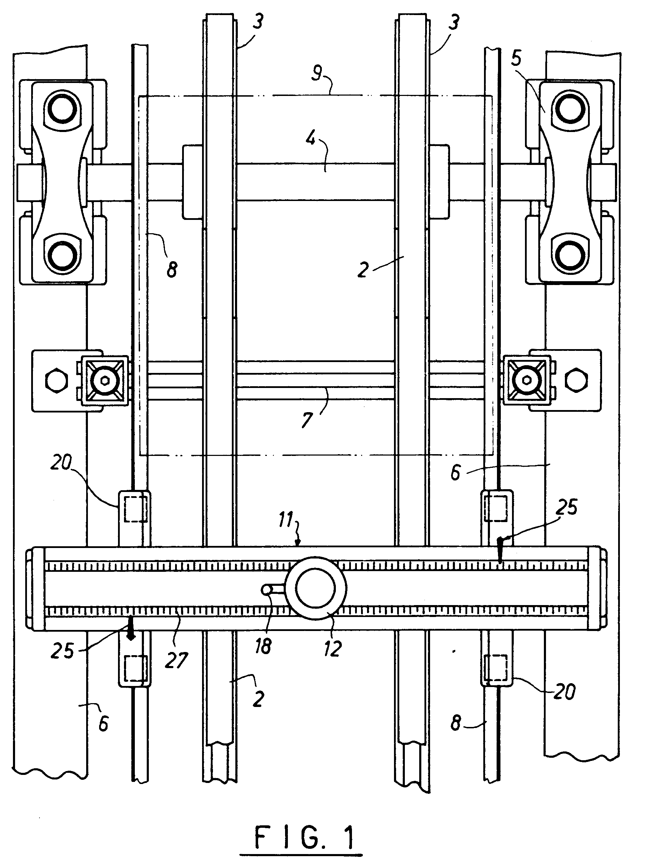

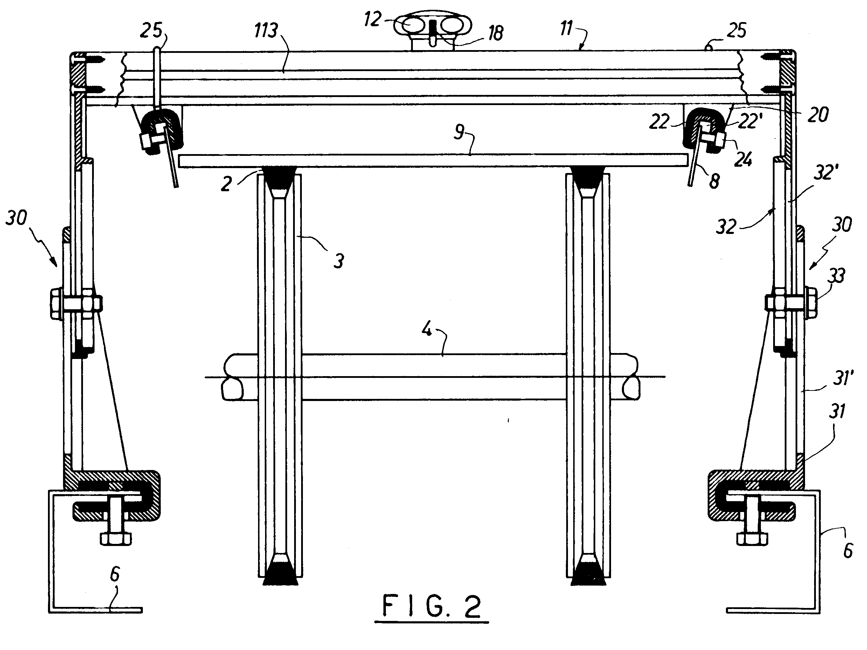

Figures 1 and 2 show a conveying line portion to which the support unit of the invention is applied.

Said line comprises two conveyor belts which pass about pulleys 3 keyed onto the shaft 4, which is carried by supports 5 fixed to two lateral beams 6 positioned externally to the belts 2 and forming part of the frame of the conveying line.

The reference numeral 7 indicates cross-members which, in positions distributed along the line, connect together the beams 6.

Objects 9 (Figure 2), which in the illustrated case are flat objects such as ceramic tiles, rest on the belts 2.

To guide the objects 9 while travelling on the belts 2 there are provided two walls or guides 8 positioned to the sides of the belts 2 and supported by support units according to the invention. Figure 1 shows only one of these units, which are obviously distributed along the entire line.

The support unit of the invention comprises a horizontal fixed cross-member arranged transversely to the direction of advancement of the conveying line and supported above the belts 2 by two lateral columns 30 of adjustable height, which extend upwards from the beams 6 (Figure 2). The cross-member 11 supports clamps 20 to which the two walls or guides 8 are fixed. The clamps 20 are linked to the cross-member 11 in a way that they may slide along the cross-member 11.

A mechanism, carried by the cross-member 11 and operable by a knob 12, is provided to simultaneously vary in opposite directions the position of the two clamps 20 along the cross-member 11.

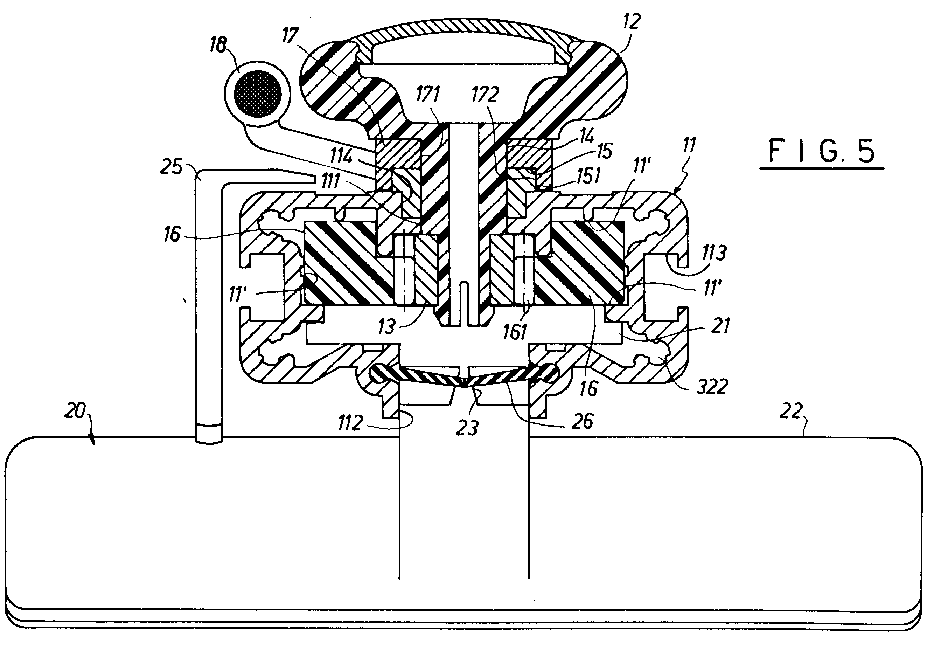

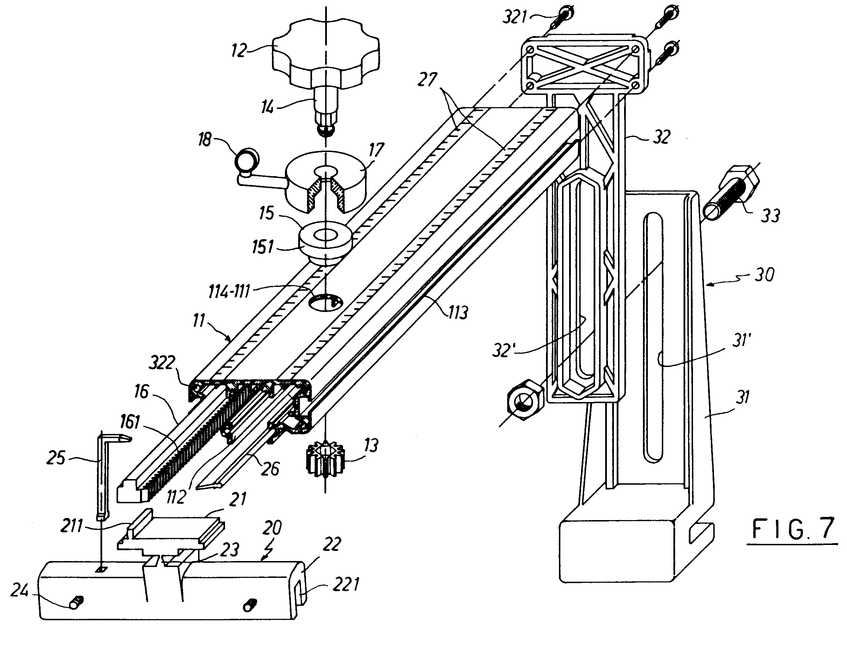

Specifically, said mechanism in the embodiment shown in Figures 5 and 7 comprises a gearwheel 13 keyed onto the lower end of the member 14 which forms the shank of the knob 12 and is engaged by the cross-member 11 so as to be able to rotate with its axis vertical and perpendicular to this latter.

The shank 14 is inserted into the hole 111 in the cross-member 11 via a first annular element 15, which has an external shoulder and is forced into a seat 114 in the cross-member 11, the seat being coaxial to the hole 111.

The outer surface 151 of the ring 15 is slightly out of alignment with the central hole in the ring 15, ie with the axis of the knob 12. The element 15 acts as a bush for the shank 14.

The cross-member 11 is formed from a piece of extruded section of constant, hollow, lowerly open cross-section, for example of aluminium. Into it there are inserted and guided in a sliding way two bars 16 each provided with rack toothing 161 along their entire length, which engages with the gearwheel 13 positioned between the two bars.

A clamp 20 is lowerly fixed to each bar 16.

The cross-section of the cross-member 11 is shaped to define elements having contact surfaces 11' which guide the bars 16 by maintaining them in such a position that they can slide longitudinally along the cross-member 11.

Each clamp 20 comprises an upper element 21 to be fixed against the lower surface of the respective bar 16, and is slidable within the cavity of the cross-member 11 together with the bar 16.

The element 21 comprises an upwardly directed projection 211 which exactly fits into a corresponding cavity (not shown) provided in the lower surface of the bar 16.

The clamp 20 also comprises a lower element 22, which extends below the cross-member 11 to receive the wall or guide 8. For this purpose, the element 22 possesses a downwardly facing groove 22' which houses the upper portion of the wall or guide 8, this being rigidly fixed by pressing screws 24 (Figure 7).

The upper element 21 is joined to the lower element 22 by a narrow portion 23 which passes through the lower aperture 112 in the cross-member 11. The intermediate element 23 has a portion which is much narrower than the aperture 112. Along the edges of the aperture 112 there are provided gaskets 26, the lips of which close the aperture 112 while enabling the narrow portion 23 to pass by flexing slightly against the sides of this latter.

On rotating the knob 12 the gearwheel 13 rotates, with consequent movement of the bars 16 which slide in opposite directions symmetrically with respect to the knob, to move the guides 8.

Locking means are provided to stabilize the position assumed by the clamps 20. These comprise a second annular element 17 having a first cylindrical portion 171 which receives the shank 14, and a second cylindrical portion 172, slightly out of alignment with the portion 171, to receive the upper part of the ring 15.

As stated, the outer surface 151 of the ring 15 is out of alignment with the axis of the knob 12 by the same amount.

A lever 18 is fixed to the second annular element 17 to enable this element to be manually rotated. On rotating the element 17 relative to the annular element 15 which is fixed, the portion 171 of the element 17 interferes with the surface of the shank 14 because of said slight misalignment, so blocking its rotation. Consequently, when the walls or guides 8 have been position-adjusted they remain locked.

To each lower element 22 there is fixed a pointer 25 in the form of a small bent rod, the upper tip of which lies above the upper face of the cross-member 11. In correspondence with each pointer 25, this upper face carries a graduated scale 27 which extends longitudinally along the cross-member 11, to indicate by the position of the pointer 25 the position of the clamp 20 and the relative wall 8.

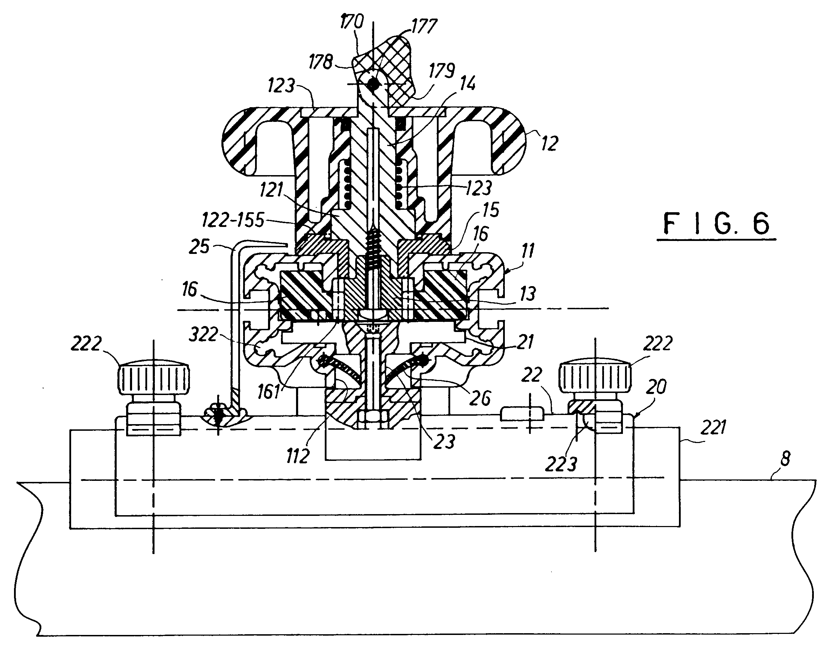

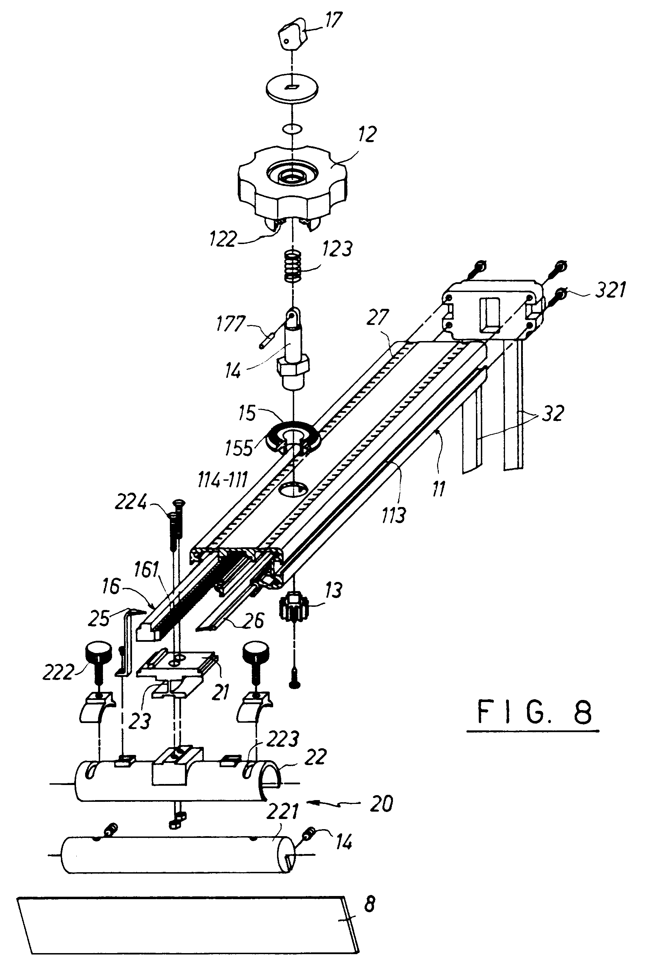

In a different embodiment of the invention shown in Figures 6 and 8, the gearwheel 13 which engages with the racks of the two bars 16 is fixed below a cylindrical member 14 which rotates, by way of an annular element 15 acting as a bush, within the hole 111 in the cross-member 11.

The annular element 15 is fixed into said hole, and upperly comprises frontal toothing 155. The knob 12, which is provided lowerly with frontal toothing 122 conjugate with the toothing 155, can slide axially on the upper part of the member 14.

The knob is kept raised by a spring 123, in which position the toothings 122 and 155 do not engage and the knob can rotate freely about its axis.

When the knob is pressed downwards, the toothings 122 and 155 engage one in the other and the rotation of the knob is transmitted to the member 14 and to the gearwheel 13.

`The lowering of the knob 12 and its retention in the lowered position is facilitated by the action of the lever 170, pivoted to the top of the member 14, which has two flattened surface portions 178 and 179 positioned at different distances from the axis of rotation 177.

The distance between the two walls is adjusted by lowering and rotating the knob 12, after which when adjustment has been effected the raising of the knob disengages it from the member 13 and gearwheel 13 to stabilize the adjustment.

In this embodiment the clamp 20 is shaped as a cylindrical segment 22, and receives a cylindrical member 221 to which the wall 8 is fixed.

The member 221 can rotate within the cylindrical segment 22, and be locked by the screws 222 which pass through the slots 223.

The inclination of the walls can be adjusted in this manner.

It should be noted that the cylindrical member 22 is not integral with the upper part of the clamp 20, but is fixed to it by screws 224.

As stated, the cross-member 11 is positioned above the conveying line and is supported by two vertical support columns 30 positioned to the sides of the advancement track defined by the belts 2. Each column 30 comprises a vertically extending lower portion 31 to be fixed at its lower end to one of the beams 6, and a vertically extending upper portion 32, the upper end of which is connected to one end of the cross-member 11 by screws 321 which engage in suitable seats 322 provided in the contour of the cross-member 11. The two portions 31 and 32 are inserted one into the other so that they can mutually slide in a vertical direction, and are locked together by a transverse bolt 33 which presses them together by passing through vertical slots 31' and 32' provided in the portions 31 and 32 respectively.

The outer face of the portion 31 is provided with a graduated scale (not visible in the figures) to indicate, in combination with the lower end of the upper portion 32 (which acts as a pointer) the position of one portion relative to the other and hence the total height of the column 30.

By tightening or slackening the bolts 33 the height of the column 30 can be varied to the exact extent required, because of said graduated scales. This is done to vary the height of the cross-member 11 above the beams 6, for example in order to vary the height of the walls or guides 8 relative to the belts 2, or to adapt the support unit to different conveying line configurations, for example to adapt it to different diameters of the pulleys 3.

Moreover, advantageously, the contour of the cross-member 11 possesses grooves 113 in its outer faces to receive, by insertion, elements for coupling other means (not shown in the figures but of known type), such as sensor means.

## Claims

1. A support unit for the walls or guides of conveying lines, comprising a cross-member (11) positioned above the conveying line(2) and orthogonal thereto to support two clamps (20) for supporting the walls or guides (8), the clamps (20) being slidable along the cross-member (11), characterised in that it comprises two bars (16) sliding within an aperture (112) provided in the lower part of the cross-member (11), the cross-member (11) being of constant hollow cross-section and the bars (16) being provided with racks (161) which engage in a common central pinion (13) keyed onto a member (14) emerging from above the cross-member where it is engaged by a knob (12), each bar (16) carrying a clamp (20) at its lower part for supporting the wall or guide, and means (15, 17, 155, 122) being provided to maintain said member in position.

2. A unit as claimed in claim 1, characterised in that each clamp (20) for the walls or guides (8) comprises:
an upper element (21) to be fixed against the surface of the respective bar (16) and slidable within the cavity of the cross-member (11);
a lower element (22) positioned external to the cross-member (11), for connection to the walls or guides (8);
a narrow portion (23) joining the upper element (21) to the lower element (22) and passing through the longitudinal lower aperture (112) in the cross-member (11);
gasket means (26) positioned to close said aperture (112) but allowing passage of the intermediate element (23)

3. A unit as claimed in claim 1, characterised in that the member (14) forms the shank of the knob (12) and operates the mechanism (13, 16) and is inserted into a hole (111) provided in the cross-member (11) and having its axis perpendicular to this latter;
and it comprises:
- a first annular member (15) forced into the hole (111) to act as a bush for the member (14), having an upper cylindrical outer surface (151) which is external to the cross member (11) and has its axis not aligned with the axis of the member (14), the member (14) being inserted into the hole (111) by way of the annular member (15),
- a second annular member (17) placed about the member (14) having a first cylindrical inner surface (171) which mates with the cylindrical outer surface of the member (14), and a second cylindrical inner surface which (172) having its axis parallel but not aligned with the axis of the member (14) and receiving the outer surface (151) of the first annular member (15),
- a lever means to manually rotate said second annular element (17) relative to the first annular element (15).

4. A unit as claimed in claim 1, characterised in that a knob (12), kept raised by a spring (123), is mounted on the member (14) in such a manner as to be able to slide axially and rotate freely, and is provided on its lower face with frontal engagement means (122) able to frontally engage with and disengage from second engagement means (155) complementary to the first means (122) and provided on the member (14), there being provided pivoted to the top of the member (14) a manually operable lever means (170) for pushing the knob (12) downwards relative to the member (14) to bring the engagement means (122) and (155) into mutual engagement.

5. A support unit for walls or guides of conveying lines as claimed in claim 4, characterised in that the lever (170) is pivoted to the top of the member (14) on the axis (177) and comprises two surfaces (178) and (179) which are at different distances from the axis (177) and are arranged to rest against the top of the knob (12) to maintain it stably in its lowered or raised position.

6. A support unit as claimed in claim 1, characterised in that each clamp (20) for the walls or guides (8) comprises a section element (22) of C cross-section positioned with its concavity facing downwards and into which there is inserted a member (221) of circular cross-section which exactly fits the cavity of the section element (22) and to which there is fixed a wall or guide (8); tightening screws (222) being provided to clamp said member of circular cross-section at its desired orientation within the section element (22), this latter comprising slots (223) extending arcuately in the transverse plane and through which the shanks of the screws (222) pass.

7. A unit as claimed in claim 1, characterised in that to each clamp (20) there is fixed a pointer (25) slidable along a graduated scale (27) positioned longitudinally on the cross-member (11) and arranged to indicate the position of the clamp (20) along the cross-member (11).

8. A unit as claimed in claim 1, characterised in that the cross-member 11 is supported by two vertical columns (30) positioned to the sides of the conveyor advancement track, each support column comprising a lower vertically extending portion (31) the lower end of which is arranged to be fixed to the lateral beam (6) of the conveying line; and
an upper vertically extending portion (32) the upper end of which is connected to a respective end of the cross-member (11);
said two portions (31), (32) being mutually slidable in a vertical direction so as to vary the total length of the column (30) and being joined together by a pressing bolt (33) positioned through vertical slots (31'), (32') in the portions (31), (32); on the lower portion (31) there being provided a graduated scale to indicate the position of one portion relative to the other.

## Patentansprüche

1. Trageeinheit für die Seitenwände oder Führungen von Förderlinien, welche ein über der Förderlinie (2) und orthogonal zu derselben positioniertes Querelement (11) aufweist, um zwei Klemmen (20) zur Aufnahme der Seitenwände oder Führungen (8) aufzunehmen, wobei die Klemmen (20) entlang des Querelements (11) verschieblich sind,
**dadurch gekennzeichnet,** daß
sie zwei Stangen bzw. Schienen (16) aufweist, welche in einer innerhalb des unteren Teils des Querelements (11) vorgesehenen Ausnehmung (112) verschieblich sind, wobei das Querelement (11) von konstant hohlem Querschnitt ist und die Schienen (16) mit Zahnstangen (161) versehen sind, welches in ein gemeinsames, zentrales Zahnrad (13) eingreifen, das an einem sich von oberhalb des Querelements ausgehenden Glied (14) angebracht ist, wo ein Knopf (12) in es eingreift, wobei jede Schiene (16) an ihrem unteren Teil eine Klemme (20) zur Aufnahme der Seitenwand oder Führung trägt, und wobei Einrichtungen (15,17,155,122) vorgesehen sind, um das Element in Position zu halten.

2. Einheit nach Anspruch 1,
**dadurch gekennzeichnet,** daß
jede Klemme (20) für die Seitenwände oder Führungen (8) folgendes aufweist:
ein oberes Element (21) zur Befestigung an der Oberfläche der entsprechenden Schiene (16) und verschieblich innerhalb des Hohlraumes des Querelements (11);
ein unteres Element (22), welches außerhalb des Querelementes (11) angebracht ist, zur Verbindung mit den Seitenwänden oder Führungen (8);
einen Verengungsabschnitt (23), welcher das obere Element (21) mit dem unteren Element (22) verbindet und durch die untere Längsöffnung (112) in dem Querelement (11) durchgeführt ist;
Dichtungseinrichtungen (26), welche in der Nähe der Öffnung (112) angeordnet sind, jedoch ein Durchführen des Zwischenelements (23) erlauben.

3. Einheit nach Anspruch 1,
**dadurch gekennzeichnet,** daß
das Glied (14) den Schaft des Knopfes (12) bildet, den Mechanismus (13, 16) betreibt, in einer in dem Querelement (11) vorgesehenen Bohrung (111) eingeführt ist und dessen Achse senkrecht zu letzterer ausgerichtet ist;
und folgendes aufweist:
ein erstes ringförmiges Glied (15), welches in die Bohrung (111) gedrückt ist, um eine Buchse für das Glied (14) zu bilden, und welches eine obere zylindrische Außenfläche (151) aufweist, die außerhalb des Querelements (11) angeordnet ist, und dessen Achse nicht mit der Achse des Gliedes (14) übereinstimmt, wobei das Glied (14) in die Bohrung (111) durch das ringförmige Glied (15) eingeführt wird;
ein zweiten ringförmiges Glied (17), welches um das Glied (14) angeordnet ist, und welches eine erste zylindrische Innenfläche (171) aufweist, welche mit der zylindrischen Außenfläche des Gliedes (14) zusammenarbeitet, und eine zweite zylindrische Innenfläche (172), deren Achse parallel, jedoch nicht fluchtend mit der Achse des Gliedes (14) ist und welche die äußere Oberfläche (151) des ersten ringförmigen Gliedes (15) aufnimmt;
eine Hebeleinrichtung, um das zweite ringförmige Glied (17) relativ zu dem ersten ringförmigen Glied (15) zu rotieren.

4. Einheit nach Anspruch 1,
**dadurch gekennzeichnet,** daß
ein durch eine Feder (123) oben gehaltener Knopf (12) an dem Glied (14) in einer solchen Art und Weise angebracht ist, daß er axial verschiebbar und frei rctierbar ist, und daß er an seiner Unterseite mit Frontal-Eingreifeinrichtungen (122) versehen ist, welche in der Lage sind, mit zweiten Eingreifeinrichtungen (155), welche komplementär zu den ersten Eingreifeinrichtungen (122) sind und an dem Glied (14) angebracht sind, einzugreifen und sich von diesen zu lösen, wobei eine an der Oberseite des Gliedes (14) drehbar gelagerte, manuell zu betreibende Hebeleinrichtung (170) zum Drücken des Knopfes (12) nach unten relativ zu dem Glied (14) vorgesehen ist, um die Eingreifeinrichtungen (122) und (155) in gegenseitigem Eingriff miteinander zu bringen.

5. Trageeinrichtung für Seitenwände oder Führungen von Förderlinien nach Anspruch 4,
**dadurch gekennzeichnet,** daß
der Hebel (170) an der Oberseite des Gliedes (14) auf der Achse (177) drehbar gelagert ist und zwei Oberflächen (178) und (179) aufweist, welche einen unterschiedlichen Abstand von der Achse (177) aufweisen und so angebracht sind, daß sie gegen die Oberseite des Knopfes (12) ruhen, um ihn in seiner unteren oder oberen Position zu halten.

6. Trageeinheit nach Anspruch 1,
**dadurch gekennzeichnet,** daß
jede Klemme (20) für die Seitenwände oder Führungen (8) ein Profil- bzw. Verbindungsglied (22) mit C-Querschnitt aufweist, welches mit seiner Konkavität nach unten gerichtet ist, und in welches ein Glied (221) von kreisförmigem Querschnitt eingeführt ist, das genau in die Ausnehmung des Profilgliedes (22) paßt, und an welches eine Seitenwand oder Führung (8) angebracht ist; wobei Spannschrauben (222) vorgesehen sind, um das Glied mit kreisförmigem Querschnitt mit der gewünschten Ausrichtung innerhalb des Profilgliedes (22) zu klemmen, wobei letzteres Schlitze (223) aufweist, welche sich in der Querebene bogenförmig erstrecken und durch welche die Schäfte der Schrauben (222) durchgeführt sind.

7. Einheit nach Anspruch 1,
**dadurch gekennzeichnet,** daß
an jede Klemme (20) ein Zeiger (25) angebracht ist, welcher entlang einer Meßskala (27) verschieblich ist, welche in Längsrichtung an dem Querelement (11) angebracht ist und dazu vorgesehen ist, die Position dar Klemme (20) entlang des Querelements (11) anzuzeigen.

8. Einheit nach Anspruch 1,
**dadurch gekennzeichnet,** daß
das Querelement (11) durch zwei vertikale Säulen (30) gestützt ist, welche an den Seiten des Förderbandes angebracht sind, wobei jede Stützsäule einen unteren, sich vertikal erstreckenden Abschnitt (31) aufweist, dessen unteres Ende dafür vorgesehen ist, mit dem seitlichen Träger (6) der Förderlinie verbunden zu werden; und
einen oberen, sich vertikal erstreckenden Abschnitt (32), dessen oberes Ende mit einem entsprechenden Ende des Querelements (11) verbunden ist;
wobei die beiden Abschnitte (31), (32) in einer vertikalen Richtung gegeneinander verschiebbar sind, um die Gesamtlänge der Säule (30) zu variieren und durch einen Preßbolzen (33) miteinander verbunden zu werden, welcher durch vertikale Schlitze (31'), (32') in den Abschnitten (31), (32) positioniert ist; wobei an dem unteren Abschnitt (31) eine Meßskala vorgesehen ist, um die Position eines Abschnittes relativ zu dem anderen anzuzeigen.

## Revendications

1. Unité support pour les parais ou guides de convoyeurs, comprenant une traverse (11) positionnée au-dessus du convoyeur (2) et orthogonalement à lui, de façon à supporter deux pinces (20) pour supporter les parais ou guides (8), les pinces pouvant coulisser le long de la traverse (11), caractérisée en ce qu'elle comprend deux barres (16), coulissant à l'intérieur d'une ouverture (112) prévue dans la partie inférieure de la traverse (11), la traverse (11) ayant une section transversale creuse constante et les barres (16) étant pourvues de crémaillères (161) qui s'engagent dans un pignon central commun (13) claveté sur un organe (14) dépassant du dessus de la traverse où il est engagé par un bouton (12), chaque barre (16) portant une pince (20) à sa partie inférieure pour supporter la paroi ou le guide, et des moyens (15, 17, 155, 122) étant prévus pour maintenir ledit organe en position.

2. Unité selon la revendication 1,
caractérisée en ce que chaque pince (20), pour les parois ou guides (8), comprend :
un élément supérieur (21) destiné à être fixé contre la surface de la barre respective (16), pouvant coulisser à l'intérieur de la cavité de la traverse (11) ;
un élément inférieur (22) positionné extérieurement à ladite traverse (11) pour assurer la connexion aux parois ou guides (8) ;
une partie étroite (23) réunissant l'élément supérieur (21) à l'élément inférieur (22) et traversant l'ouverture inférieure longitudinale (112) formée dans la traverse (11) ;
une garniture (26) positionnée pour obturer ladite ouverture (112) mais permettant le passage de l'élément intermédiaire (23).

3. Unité selon la revendication 1,
caractérisée en ce que l'organe (14) forme le moyeu du bouton (12) et actionne le mécanisme (13, 16) et est introduit dans un orifice (111) prévu dans la traverse (11) et ayant son axe perpendiculaire à cette dernière ;
et elle comprend :
- un premier organe annulaire (15), entré à force dans l'orifice (111) pour agir comme un manchon pour l'organe (14), présentant une surface extérieure cylindrique supérieure (151) qul est extérieure à la traverse (11) et qui a son axe qui n'est pas aligné avec l'axe de l'organe (14), l'organe (14) étant introduit dans l'orifice (111) au moyen de l'organe annulaire (15),
- un second organe annulaire (17) placé autour de l'organe (14) présentant uns première surface interne cylindrique (171) qui épouse la surface extérieure cylindrique de l'organe (14), et une seconde surface cylindrique interne (172) qui a son axe parallèle mais non pas aligné avec l'axe de l'organe (14) et qui reçoit la surface extérieure (151) du premier organe annulaire (15),
- un levier pour faire tourner manuellement ledit second élément annulaire (17) par rapport audit premier élément annulaire (15).

4. Unité selon la revendication 1,
caractérisée en ce qu'un bouton (12), maintenu soulevé par un ressort (123), est monté sur l'organe (14), de façon à pouvoir coulisser axialement et tourner librement, et est pourvu sur sa face inférieure, avec un moyen d'engagement frontal (122), susceptible de venir porter frontalement contre et de se dégager d'un second moyen d'engagement (155) formé complémentairement au premier moyen (122) et prévu sur l'organe (14), un levier (170), pouvant être actionné à la main, étant prévu articulé au sommet de l'organe (14) pour pousser le bouton (12) vers le bas par rapport à l'organe (14), de façon à amener les moyens d'engagement (122) et (155) en engagement mutuel.

5. Unité support pour les parois ou guides de convoyeurs selon la revendication 4, caractérisée en ce que le levier (170) est articulé au sommet de l'organe (14) sur l'axe (177) et comprend deux surfaces (178) et (179) qui sont situées à des distances différentes de l'axe (177) et sont disposées de façon à reposer contre le sommet du bouton (12), pour le maintenir de façon stable dans sa position abaissée ou dans sa position soulevée.

6. Unité support selon la revendication 1,
caractérisée en ce que chaque pince (20) pour les parois ou guides (8) comprend un élément de section (22) ayant en section transversale la forme d'un C, positionné avec sa concavité dirigée vers le bas et dans lequel est introduit un organe (221) de section transversale circulaire qui s'ajuste exactement à la cavité de l'élément de section (22) et auquel est fixé(e) une paroi ou un guide (8) ; des vis de serrage (222) étant prévues pour serrer ledit organe de section transversale circulaire sous l'orientation désirée à l'intérieur dudit élément de section (22), ce dernier comprenant des fentes (223) s'étendant en courbe dans le plan transversal et à travers lesquelles passent les tiges des vis (222).

7. Unité selon la revendication 1,
caractérisée en ce que, à chaque pince (20), est fixé un index (25) qui coulisse le long d'une échelle graduée (27) positionnée longitudinalement sur la traverse (11) et disposé de façon à indiquer la position de la pince (20) le long de la traverse (11).

8. Unité selon la revendication 1,
caractérisée en ce que la traverse (11) est supportés par deux colonnes verticales (30) positionnées sur les côtés du trajet d'avancement du convoyeur, chaque colonne support comprenant une partie inférieure s'étendant verticalement en (31), dont l'extrémité inférieure est disposée de façon à être fixée à la poutre latérale (6) du convoyeur ; et
une partie supérieure s'étendant verticalement en (32) dont l'extrémité supérieure est connectée à l'extrémité respective de la traverse (11) ;
lesdites deux parties (31), (32) coulissant mutuellement dans une direction verticale, de façon à faire varier la longueur totale de la colonne (30) et étant réunies entre elles par un boulon de pressage (33) positionné à travers des fentes verticales (31'), (32') dans les parties (31), (32) ; une échelle graduée étant prévue sur la partie inférieure (31) de façon à indiquer la position d'une partie relativement à l'autre.
